Europäisches Patentamt

European Patent Office

Office européen des brevets

(11) Publication number: **0 404 738**
**A2**

# EUROPEAN PATENT APPLICATION

(21) Application number: **90850172.9**

(22) Date of filing: **10.05.90**

(51) Int. Cl.⁵: **F16C  33/10**

(30) Priority: **21.06.89 SE 8902242**

(43) Date of publication of application:
**27.12.90 Bulletin  90/52**

(84) Designated Contracting States:
**DE FR GB IT**

(71) Applicant: **SKF Nova AB**

**S-415 50 Göteborg(SE)**

(72) Inventor: **Adolfsson, Rune**
**Bandholzgatan 35**
**S-43252 Varberg(SE)**
Inventor: **Lindsten, Göran**
**Torsgatan 25**
**S-43138 Mölndal(SE)**

(74) Representative: **Forsberg, Lars-Ake et al**
**SKF NOVA AB Patent Department**
**S-415 50 Göteborg(SE)**

(54)  **A magnetic bearing bushing I.**

(57)  A bearing bushing incorporating a sleeve (1) of magnetisable material forming the sliding surface of the bearing, a shaft (2) mounted in said sleeve (1) and a lubricant in the form of a magnetic fluid (3) between the sliding surface of the sleeve (1) and the shaft (2), whereby the sleeve (1) is magnetised in axial direction. For causing a hydrodynamic lubrication and an increased cooling effect the sleeve (1) has a number of radial holes (4) through which the magnetic fluid (3) may pass to the outer side of the sleeve (1), and which, by the axial magnetic field about the sleeve (1), is given a circulating motion along the inner and outer side of the sleeve.

Fig.1

EP 0 404 738 A2

## A MAGNETIC BEARING BUSHING I

### Technical field

The present invention refers to a bearing bushing incorporating a sleeve of magnetisable material forming the sliding surface of the bearing, a shaft mounted in said sleeve and a lubricant in the form of a magnetic fluid between the sliding surface of the sleeve and the shaft, whereby the sleeve is magnetised in axial direction.

### Background of the invention

Magnetic bearings of the above mentioned type are used in many applications, e.g. at disk storages for computers, in domestic machines etcetera, wherein it is aimed at silent operation, extended operation life and high rotational accuracy. An important advantage at such bearings is that the lubricant, which contains particles of magnetisable material, is retained in the bearing by the magnetic field generated by the magnetic bearing sleeve, whereby leakage of the lubricant is prevented.

In DE-A-3.304.623 is shown a magnetic bearing incorporating a magnetic bearing sleeve, which on its surface facing the shaft has grooves for causing a hydrodynamic pressure in the magnetic fluid. This device has a complex design and the shape of the grooves furthermore requires that the shaft is rotated in the same direction all the time.

### Purpose and most essential features of the invention

The purpose of the present invention is to provide a bearing of the type initially mentioned, which gives a hydrodynamic lubrication and an efficient cooling and which is simple and inexpensive to manufacture. This has been achieved by provision of a sleeve having a number of radial holes through which magnetic fluid may pass to the outer side of the sleeve, and which, by an axial magnetic field around the sleeve, is given a circulating motion along the inner and outer side of the sleeve.

### Description of the drawings

The invention hereinafter will be further described with reference to an embodiment shown in the accompanying drawings.

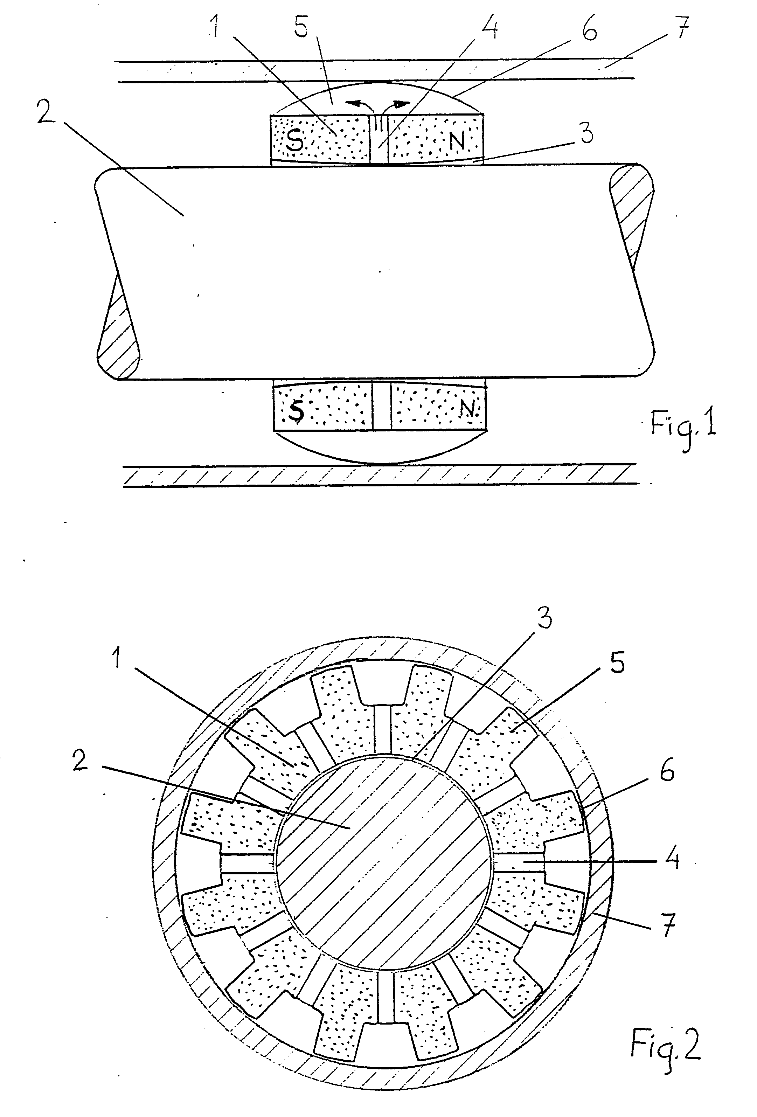

Fig. 1 is an axial section through a bearing bushing according to the invention and having a shaft positioned therein.

Fig. 2 is a section along line II-II in Fig. 1.

### Description of embodiments

The bearing bushing incorporates a sleeve 1 of magnetisable material, preferably a synthetic material, in which have been embedded magnetic particles, e.g. magnetite particles. The shaft 2 may be of a magnetic or non-magnetic material. Between the sleeve 1 and the shaft 2 is introduced a lubricant in form of a magnetic fluid 3, a so called "ferrofluid", i.e. a colloidal dispersion or suspension of small magnetic particles in a carrier fluid, e.g. oil. The magnetic particles are retained in stable colloidal suspension by means of a dispersant. Such magnetic fluids can be introduced and retained in spaces without a container by means of a magnetic field.

The sleeve 1 is magnetised in axial direction, which means that magnetic fluid 3 is gathered at the ends of the sleeve 1 thereby sealing off it. The sleeve 1 has a number of radial holes 4, through which magnetic fluid 3 may pass to the outer side of the sleeve 1. By means of the magnetic field present around the sleeve 1 in axial direction a certain circulation of the magnetic fluid will occur, which provides a cooling effect.

In order further to improve this cooling effect the sleeve 1 externally has radial cooling flanges 5. The radial holes 4 are preferably located between the cooling flanges 5. These preferably have spherical set up surfaces 6 for the sleeve 1 in a bearing housing 7 or the like. The sleeve 1 furthermore preferably has a cambered inner form for taking up shaft obliquities.

As mentioned above the sleeve 1 is manufactured from a synthetic material, e.g. plastic material or rubber with embedded magnetite particles, alternatively with an embedded magnetisable steel spring. The advantages with a sleeve of magnetisable plastic material are obvious, it may be manufactured by injection moulding and it is possible to give it complex shapes.

### Claims

1. A bearing bushing incorporating a sleeve (1) of magnetisable material forming the sliding surface of the bearing, a shaft (2) mounted in said sleeve (1) and a lubricant in the form of a magnetic fluid (3) between the sliding surface of the sleeve (1) and the shaft (2), whereby the sleeve (1) is magnetised in axial direction,

**characterized therein,**

that the sleeve (1) has a number of radial holes (4) through which the magnetic fluid (3) may pass to the outer side of the sleeve (1), and which, by the axial magnetic field around the sleeve (1), is given a circulating motion along the inner and outer side of the sleeve.

2. The bearing bushing as claimed in claim 1,

**characterized therein,**

that the sleeve (1) externally has axial cooling flanges (5).

3. The bearing bushing as claimed in claim 2,

**characterized therein,**

that the radial holes (4) are situated between the cooling flanges (5).

4. The bearing bushing as claimed in claim 2 or 3,

**characterized therein,**

that the cooling flanges (5) have spherical surface portions (6) forming a spherical set up surface for the sleeve (1).

Fig.1

Fig.2